# DEMANDE DE BREVET EUROPEEN

(11) **EP 1 198 990 A2**
(43) Date de publication de la demande: **24.04.2002**
(21) Numéro de dépôt: 01402691.8
(22) Date de dépôt: 18.10.2001
(51) Int. Cl.: A23B 4/005, A23B 4/12

(54) **Procédé de conservation de volailles ou de lapins, par appértisation, et additifs utilisés**

(30) Priorité: 19.10.2000 FR 0013379
(71) Demandeur: Tilly-Sabco, 29650 Guerlesquin (FR)
(72) Inventeur: Sauvaget, Daniel, 29600 Morlaix (FR); Auffret, Patrice, 56620 Pont Scorff (FR)
(74) Mandataire: Des Termes, Monique

(57) **Abrégé**

L'invention concerne un procédé de conservation de volailles telles que des poulets et des dindes, ou de lapins, entiers ou découpés, par appertisation, utilisant un additif comprenant les constituants suivants :
- un composé acide anti-oxygène, et
- au moins deux sels de sodium et/ou de potassium assurant le maintien et la dureté des os et des cartilages, et fermeté de la chair et de la peau après appertisation.

Le composé acide peut être l'acide citrique. Les sels sont par exemple le citrate de sodium, le carbonate de sodium et le bicarbonate de sodium.

## Description

### Domaine technique

La présente invention a pour objet un additif nécessaire à la bonne conservation de volailles, en particulier de poulets et de dindes, ou de lapins, par appertisation.

De façon plus précise, elle concerne un additif qui permet de protéger l'aspect habituel de la peau, de la chair, des os et des cartilages, lors de l'appertisation appliquée aux volailles et plus particulièrement aux poulets, dindes ou lapins.

### État de la technique antérieure

La technique utilisée habituellement pour assurer la conservation de viandes tels que les poulets, les dindes et les lapins, est la technique de congélation qui permet de conserver la viande sans modification d'apparence et de structure.

Toutefois, le transport et le stockage de viandes congelées impliquent des contraintes physiques et énergétiques. En effet, il est indispensable de ne pas rompre la chaîne du froid au cours du transport et du stockage, ce qui rend nécessaire l'utilisation de moyens de transport et d'entreposage frigorifiques basse température. Cette technique de conservation, coûteuse, nécessite des investissements lourds en véhicules de transport et moyens de stockage. Ces activités représentent une consommation d'énergie importante.

Aussi, pour l'exportation de ces viandes dans des pays éloignés, les coûts de fabrication, de stockage et de transport sont très élevés.

Pour remplacer la conservation par congélation des viandes congelées, il a été envisagé de les conserver par stérilisation, ce qui présente de nombreux avantages. D'une part, le coût est beaucoup plus faible et il n'y a aucune contrainte pour le stockage et le transport. D'autre part, les produits stérilisés permettent d'apporter les protéines essentielles sous forme de viande, et la ration d'eau nécessaire à la préparation éventuelle de légumes ou de céréales d'accompagnement en utilisant l'eau de stérilisation du produit.

Cependant, les tentatives utilisées jusqu'à présent pour obtenir de telles viandes stérilisées ne permettaient pas d'obtenir un produit satisfaisant. En effet, les volailles, lors de la stérilisation, se transformaient en bouillie de laquelle il était impossible de dissocier les os et les cartilages de la chair du poulet, de la dinde ou du lapin.

C'est pourquoi, il n'existe actuellement en conserve aucun produit stérilisé non cuisiné à base de telles viandes.

### Exposé de l'invention

La présente invention a précisément pour objet un additif pour la stérilisation de poulet, de dinde ou de lapin par appertisation, additif qui permet de maintenir l'aspect habituel du produit stérilisé (peau, chair, os, cartilages).

Selon l'invention, l'additif pour la conservation par stérilisation de volailles telles que le poulet et la dinde, ou de lapins, par appertisation, comprend les constituants suivants :
- un composé acide anti-oxygène, et
- au moins deux sels de sodium et/ou de potassium assurant le maintien et la dureté des os et des cartilages, et la fermeté de la peau et de la chair, après appertisation.

Dans cet additif, le composé acide antioxygène est avantageusement un acide hydroxycarboxylique ou un diacide acceptable du point de vue alimentaire. A titre d'exemple de tels acides, on peut citer l'acide citrique et l'acide tartrique.

Les sels utilisés dans l'additif sont des sels de sodium et/ou de potassium. Il s'agit de sels d'acides faibles permettant de maintenir le pH du produit à des valeurs neutres. Ces sels peuvent être en particulier des carbonates, des bicarbonates, des citrates ou autres.

Selon l'invention, les deux sels de sodium et/ou de potassium utilisés sont de préférence le carbonate de sodium et le citrate de sodium.

Selon un mode de réalisation préféré de l'invention utilisant trois sels de sodium et/ou de potassium, l'additif comprend les constituants suivants :
- de l'acide citrique,
- du citrate de sodium,
- du carbonate de sodium, et
- du bicarbonate de sodium.

Généralement, l'additif est sous une forme pulvérulente soluble dans l'eau en vue de constituer une solution aqueuse contenant de 0,01 à 1 % en poids de chacun des constituants.

A l'additif peut être ajouté, outre du sel (1 à 4 % en poids) un ou plusieurs composés choisis parmi les épices, les gélifiants, les épaississants, les saturateurs de goût, le sucre et les aromates.

La teneur en gélifiant peut être de 0,5 à 1,5 % en poids. La teneur en épaississant peut être de 0,3 à 1,5 % en poids.

L'invention a également pour objet un procédé de préparation d'une viande stérilisée de volaille telle que le poulet et la dinde, ou de lapin, qui comprend les étapes suivantes :
a) mettre la viande dans une boîte de conserve,
b) remplir la boîte contenant la viande d'une solution aqueuse comprenant un additif tel que décrit ci-dessus,
c) sertir la boîte, et
d) stériliser la boîte à la vapeur par chauffage dans un autoclave.

On peut utiliser par exemple un autoclave fixe ou rotatif ou en continu, et opérer à une température de 110 à 140°C, par exemple pendant 45 min à 2 h, pour obtenir une valeur stérilisatrice adéquate.

Généralement la solution aqueuse utilisée dans l'étape b) de ce procédé comprend de plus au moins un composé choisi parmi le sel, les épices comme le curry, les gélifiants, par exemple les gélifiants à base d'algues, les épaississants, par exemple les carraghenanes, les saturateurs de goût, le sucre et les aromates.

Dans certains cas, on peut aussi ajouter à la viande du riz, ou des préparations à base de céréales ou de légumes (petits pois, carottes, haricots verts et autres ...), avant d'ajouter la solution aqueuse, ce qui permet de cuire, accessoirement lors de la stérilisation, les produits d'accompagnement précédemment cités.

Lorsque la viande est du poulet, elle peut être mise en boîte sous forme de poulet entier, ou découpé (demi-poulet, quart de poulet, pilon, cuisse, haut de cuisse).

Dans le cas de dindes, il s'agit de morceaux de dindes.

Dans le cas de lapins, on peut utiliser un lapin entier ou découpé.

Le conditionnement peut s'effectuer en boîte métallique (fer ou aluminium) avec ou sans ouverture facile ou en tout autre conditionnement tel qu'un emballage souple type "doy-pack" ou un contenant en verre.

D'autres caractéristiques et avantages de l'invention apparaîtront mieux à la lecture de la description qui suit. Il s'agit d'exemples de réalisation donnés bien entendu à titre illustratif et non limitatif.

### Exposé détaillé des modes de réalisation

On décrit ci-après des exemples de fabrication de poulets stérilisés. Tous les pourcentages sont donnés en poids.

### Exemple 1

Dans cet exemple, on utilise un additif comprenant de l'acide citrique, du citrate de sodium, du carbonate de sodium et du bicarbonate de sodium.

On introduit tout d'abord dans une boîte de 850 ml, dite boîte 4/4, deux morceaux de poulet constitués de deux quarts arrières pour un poids total de 540 g environ.

On remplit la boîte par débordement d'une solution aqueuse contenant en poids 2 % de sel, 0,75 % d'acide citrique, 0,02 % de citrate de sodium, 0,02 % de carbonate de sodium et 0,20 % de bicarbonate de sodium ainsi que 0,25 % de sucre.

Après sertissage de la boîte, on la stérilise dans un autoclave à une température de 125° pour une valeur stérilisatrice de 8.

Le poulet en conserve présente les caractéristiques suivantes :
- le jus est clair,
- les os sont durs,
- le goût est acceptable, et
- le pH du jus est de 6,1.

### Exemple 2

Dans cet exemple, on suit le même mode opératoire que dans l'exemple 1, pour préparer du poulet en conserve mais on utilise un autre additif. Celui-ci est ajouté à l'eau introduite dans la boite pour former une solution aqueuse comprenant en poids :
- 2% de sel,
- 0,02% de carbonate de sodium,
- 0,75% d'acide citrique,
- 0,02% de citrate de sodium, et
- 0,25% de sucre.

Le poulet en conserve présente les caractéristiques suivantes :
- le jus est clair,
- les os sont durs,
- le goût est acceptable, et
- le pH du jus est de 6,01."

### Exemple comparatif 1

A titre comparatif, on fabrique du poulet en conserve sans additif, en introduisant dans une boîte 4/4, deux quarts de poulet pesant environ 500 g et de l'eau contenant 2 % de sel. On réalise l'appertisation après sertissage, à une température de 115°C pendant 1 h 55 minutes.

Le produit obtenu présente les caractéristiques suivantes : l'odeur est agréable, le jus est clair, mais le poulet a un goût de trop cuit, les os sont déstructurés et les cartilages sont semi-liquides. Le poids du poulet cuit est de 425 g, le pH de la viande est de 5,93 et le pH du jus est de 6,4.

### Exemple comparatif 2

On effectue la même préparation de poulet en conserve que dans l'exemple comparatif 1 mais on ajoute un additif. Cet additif est ajouté à l'eau pour former une solution aqueuse comprenant :
- 0,08 % de carbonate de calcium,
- 0,08 % de citrate de sodium,
- 0,08 % d'acide ascorbique.

Le produit obtenu présente les caractéristiques suivantes : les os sont mous, la peau fondante et blanchâtre, la chair sèche, le jus trouble et le goût désagréable. Le pH du jus est de 5,66.

Ainsi, le choix du composé acide est essentiel pour obtenir un résultat satisfaisant.

### Exemple comparatif 3

Un autre essai de fabrication de produit en conserve utilisant un additif comprenant de l'acide citrique et du citrate de sodium, a donné les résultats suivants.

Le jus est trouble et l'odeur est un peu âcre. La chair est ferme, les os sont durs et les cartilages sont fermes, mais le pH du jus est de 3,75, et le pH de la viande est de 6,06.

Ainsi, on constate que le choix de l'additif de l'invention est très important pour obtenir un résultat satisfaisant.

On donne ci-après des exemples de produits en conserve réalisés par le procédé de l'invention.

### Poulet au naturel

Dans une boîte de 2 kg, on a un poulet entier non découpé, cuit dans une eau saumurée à 2 % contenant l'additif de l'exemple 1, avec adjonction de gélifiant à base d'algues.

Le produit contient :
- protéines : 181 g
- lipides : 187 g
- glucides : 1,8 g
- valeur calorique :10.000 kJ
- eau saumurée à 2 %.

La durée de conservation est de 36 mois, les dates de stérilisation et de limite de consommation sont imprimées sur le fond de la boîte, au format international.

Ce produit apporte à la fois un poulet entier prêt à être consommé mais aussi l'eau nécessaire à la cuisson sur place de légumes ou de céréales. Le poulet et son jus doivent être consommés, réchauffés ou froids, dans l'heure qui suit l'ouverture de la boîte.

### Poulet au curry

Dans une boîte de 2 kg, on a un poulet entier non découpé de 1,1 kg, cuit dans son jus aromatisé au curry. Le jus est une eau saumurée à 2 % contenant l'additif de l'exemple 1, avec adjonction de curry naturel et de gélifiant à base d'algues.

Ce produit contient :
- protéines : 181 g
- lipides : 187 g
- glucides : 1,8 g
- valeur calorique :10.000 kJ
- eau saumurée à 2 %.

La durée de conservation est de 36 mois, les dates de stérilisation et de limite de consommation sont imprimées sur le fond de la boîte, au format international.

Ce produit apporte à la fois un poulet entier prêt à être consommé, mais aussi l'eau nécessaire à la cuisson sur place de légumes ou de céréales. Le poulet et son jus doivent être consommés, réchauffés ou froids, dans l'heure qui suit l'ouverture de la boîte.

### Poulet au riz au naturel

Dans une boîte de 2 kg, on a un poulet entier non découpé de 1,1 kg, cuit dans son jus, avec du riz long grain. Il est cuit dans une eau saumurée à 2 % contenant l'additif de l'exemple 1, avec 300 g de riz étuvé long grain. Le produit contient :
- protéines : 200 g
- lipides : 188 g
- glucides : 199 g
- valeur calorique : 13.680 kJ
- eau saumurée à 2 %.

La durée de conservation est de 36 mois, les dates de stérilisation et de limite de consommation sont imprimées sur le fond de la boîte, au format international.

Ce produit apporte à la fois un poulet entier, prêt à être consommé, mais aussi la ration de riz d'accompagnement, constituant ainsi une ration alimentaire équilibrée. Le poulet et le riz d'accompagnement doivent être consommés, réchauffés ou froids, dans l'heure qui suit l'ouverture de la boîte.

Des analyses effectuées sur les produits en conserve décrits ci-dessus, obtenus conformément à l'invention, ont montré qu'il n'y avait ni spores, ni bactéries dans les produits après une période de 15 jours d'incubation à 37°C et à 55°C.

## Revendications

1. Procédé de préparation d'une viande stérilisée de volaille ou de lapin, qui comprend les étapes suivantes :
a) mettre la viande dans une boîte de conserve,
b) remplir la boîte contenant la viande d'une solution aqueuse comprenant un additif comprenant les constituants suivants :
- un composé acide anti-oxygène, et
- au moins deux sels de sodium et/ou de potassium assurant le maintien et la dureté des os et des cartilages, et la fermeté de la peau et de la chair, après appertisation,
c) sertir la boîte, et
d) stériliser la boîte à la vapeur par chauffage dans un autoclave.

2. Procédé selon la revendication 1, dans lequel le composé acide est un acide hydroxycarboxylique ou un diacide acceptable du point de vue alimentaire.

3. Procédé selon la revendication 2, dans lequel le composé acide est l'acide citrique ou l'acide tartrique.

4. Procédé selon l'une quelconque des revendications 1 à 3, dans lequel les sels sont choisis parmi les carbonates, les bicarbonates et les citrates.

5. Procédé selon la revendication 1, dans lequel l'additif comprend les constituants suivants :
- de l'acide citrique,
- du citrate de sodium,
- du carbonate de sodium, et
- du bicarbonate de sodium.

6. Procédé selon l'une quelconque des revendications 1 à 5, dans lequel l'additif est sous forme de solution aqueuse contenant de 0,01 à 1 % en poids de chacun des constituants.

7. Procédé selon la revendication 1, dan lequel la solution aqueuse comprend en poids :
- 0,75 % d'acide citrique,
- 0,02 % de citrate de sodium,
- 0,02 % de carbonate de sodium, et
- 0,20 % de bicarbonate de sodium.

8. Procédé selon l'une quelconque des revendications 1 à 7, dans lequel la solution aqueuse utilisée dans l'étape b) comprend de plus au moins un composé choisi parmi le sel, les épices, les gélifiants, les épaississants, les saturateurs de goût, le sucre et les aromates.

9. Procédé selon la revendication 7 ou 8, dans lequel la solution aqueuse comprend en outre 0,5 à 1,5 % en poids de gélifiant et/ou 0,3 à 1,5 % en poids d'épaississant.

10. Procédé selon l'une quelconque des revendications 1 à 9, dans lequel on ajoute à la viande du riz ou un légume, avant d'ajouter la solution aqueuse.

11. Procédé selon l'une quelconque des revendications 1 à 10, dans lequel la stérilisation est effectuée à une température de 110 à 140°C, pendant 45 minutes à 2 heures.

12. Procédé selon l'une quelconque des revendications 1 à 11, dans lequel la volaille est du poulet ou de la dinde.

13. Viande stérilisée obtenue par le procédé selon l'une quelconque des revendications 1 à 12, dans laquelle l'apparence et la structure de la viande d'origine sont conservées en ce qui concerne les os, les cartilages, la chair et la peau.

14. Additif pour la conservation de volailles ou de lapins, entiers ou découpés, par appertisation, qui comprend les constituants suivants :
- de l'acide citrique,
- du citrate de sodium,
- du carbonate de sodium, et
- du bicarbonate de sodium.

15. Additif selon la revendication 14, constitué par une solution aqueuse comprenant en poids :
- 0,75 % d'acide citrique,
- 0,02 % de citrate de sodium,
- 0,02 % de carbonate de sodium, et
- 0,20 % de bicarbonate de sodium.

16. Additif selon la revendication 15, dans lequel la solution aqueuse comprend en outre 0,5 à 1,5% en poids de gélifiant et/ou 0,3 à 1,5% en poids d'épaississant.
